# EUROPEAN PATENT SPECIFICATION

(11) **EP 2 985 156 B1**
(45) Date of publication and mention of the grant of the patent: **07.06.2017**
(21) Application number: 14782769.5
(22) Date of filing: 09.04.2014
(51) Int. Cl.: B60C 11/04, B60C 11/13, B60C 11/03

(54) **PNEUMATIC TIRE**
LUFTREIFEN
PNEU

(30) Priority: 09.04.2013 JP 2013081152
(43) Date of publication of application: 17.02.2016
(73) Proprietor: Bridgestone Corporation, Tokyo 104-8340 (JP)
(72) Inventor: KAWAKAMI, Yuki, Kodaira-shi Tokyo 187-8531 (JP)
(74) Representative: Oxley, Robin John George
(86) International application number: PCT/JP2014/002056
(87) International publication number: WO 2014/167859

(56) References cited:
- EP-A1- 0 718 123
- EP-A1- 2 851 211
- EP-A1- 2 873 538
- WO-A1-2013/008926
- JP-A- H1 134 615
- JP-A- 2008 500 923
- US-A- 5 960 845

## Description

### TECHNICAL FIELD

The present invention relates to a pneumatic tire capable of facilitating heat dissipation at a tread portion thereof to lower temperature of the tread portion.

### BACKGROUND ART

Heat generated at a tread portion of a tire when the tire is rotated under load exerted thereon significantly raises temperature oft the tread portion, thereby causing various troubles such as heat separation at the tread portion. It is therefore necessary to reduce heat generation or facilitate heat dissipation at a tread portion of a tire in order to decrease temperature of the tread portion.
Conventionally, there has been employed in order to decrease temperature at a tread portion of a tire a method of reducing an amount of tread rubber as heat source and increasing surface area of the tread portion to facilitate heat dissipation there by an increase in groove formation at the tread portion (e.g. Patent Literature 1). Attention is also drawn to the disclosure of EP-A-2873538, which is prior art according to Article 54(3) EPC, and which shows a circumferential groove having projections on its bottom.

### CITATION LIST

### Patent Literature

PTL 1: JP-A 2003-205706

### SUMMARY

However, the method described above, which necessitates an increase in groove formation to enhance a temperature-decreasing effect, decreases rigidity of land portions of a tread of a tire due to the increase in groove formation, thereby resulting in deterioration of wear resistance, stability and controllability of the tire. In view of this situation, an object of the present disclosure is to provide a pneumatic tire capable of facilitating heat dissipation at a tread portion thereof to decrease temperature of the tread portion with suppressing an increase in groove area as best as possible.

Our pneumatic tire as claimed in claim 1.
This structure facilitates heat dissipation in the vicinity of the middle point M between the respective two lateral grooves adjacent to each other in the tire circumferential direction, thereby decreasing temperature at the tread portion.

In the present disclosure, an "aperture plane portion" of a recessed portion represents a portion of an imaginary plane extending along a circumferential groove wall and covering the recessed portion like a lid from the tire width direction. Further, a state in which "an aperture plane portion of the lateral groove at least partially faces an aperture plane portion of the recessed portion" represents a state in which, when the aperture plane portion of the lateral groove is projected in a direction parallel to the extending direction of the lateral groove against the circumferential groove wall in which the recessed portion has been formed, the aperture plane portion of the recessed portion at least partially exists within a region corresponding to the aperture plane portion of the lateral groove thus projected.

[DELETED]

Further, it is preferable in our pneumatic tire that a length in the tire circumferential direction of the recessed portion decreases from the aperture plane portion side of the recessed portion toward the inner side of the recessed portion. This structure can contribute to a further decrease in temperature at the tread portion.

Yet further, it is preferable in our pneumatic tire that the recessed portion, in a top view of a ground contact surface of the tread, has an asymmetric planar configuration with respect to any imaginary line in parallel to the tire width direction. This structure can contribute to a satisfactory decrease in temperature at the tread portion.

Yet further, it is preferable in our pneumatic tire that the recessed portion has a mildly slanted groove wall and a sharply slanted groove wall slanted at a larger inclination angle with respect to the aperture plane portion of the recessed portion than the mildly slanted groove wall, wherein the lateral groove extends from the aperture plane portion thereof toward the outer side in the tire width direction, with being inclined in a direction from the mildly slanted groove wall side to the sharply slanted groove wall side of the recessed portion. This structure can contribute to a further decrease in temperature at the tread portion.
In a case where the lateral groove is inclined with respect to the tire width direction as described above, it is preferable that an imaginary extension of the groove wall, on the side of the sharply slanted groove wall of the recessed portion, of a pair of groove walls of the lateral groove coincides with the sharply slanted groove wall of the recessed portion. This structure can contribute to a further decrease in temperature at the tread portion.

According to the present disclosure, it is possible to provide a pneumatic tire capable of facilitating heat dissipation at a tread portion thereof to decrease temperature of the tread portion with suppressing an increase in groove area as best as possible.

### BRIEF DESCRIPTION OF THE DRAWINGS

In the accompanying drawings, wherein:
FIG. 1 is a partially developed view showing a pneumatic tire according to one embodiment of our pneumatic tire;
FIG. 2A is an enlarged developed view showing the vicinity of a recessed portion of the tire of FIG. 1;
FIG. 2B is an enlarged developed view showing the tire of FIG. 1 with flows of air (indicated by arrows) in respective grooves thereof when the tire is rotated;
FIG. 3 is an enlarged perspective view showing the tire of FIG. 1 with air flows (indicated by arrows) in respective grooves thereof when the tire is rotated in a direction opposite to that of FIG. 2B;
FIG. 4A is an enlarged developed view showing a Comparative Example tire in which the lateral grooves of FIG. 1 are modified to extend in the tire width direction, with air flows (indicated by arrows) in respective grooves thereof when the tire is rotated;
FIG. 4B is an enlarged developed view showing another Comparative Example tire which is basically the same as the Comparative Example tire of FIG. 4A but lacks the recessed portions, with air flows (indicated by arrows) in respective grooves thereof when the tire is rotated;
FIG. 6 is a cross sectional view in the tire width direction, exemplarily showing an internal structure of a tire according to one embodiment of the tire shown in FIG. 1.

### DETAILED DESCRIPTION

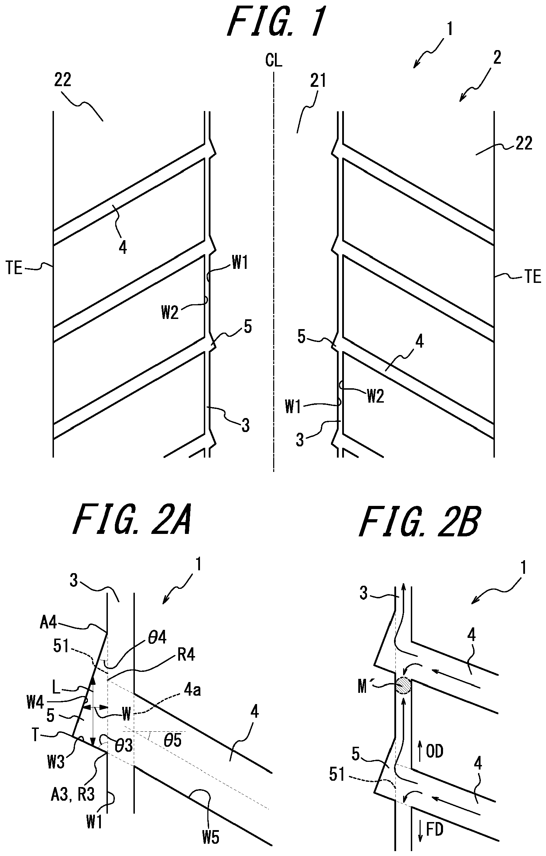

A pneumatic tire according to one embodiment of our pneumatic tire will be demonstratively described hereinafter with reference to the drawings. FIG. 1 is a developed plan view showing a tread pattern of a pneumatic tire 1 for a construction vehicle according to one embodiment of our pneumatic tire (which tire will be referred to simply as "tire" hereinafter).

A ground contact surface 2 of a tread portion of the tire 1 is provided with at least one circumferential groove 3 extending continuously in the tire circumferential direction, as shown in FIG. 1 (a pair of circumferential grooves 3 situated with the tire equatorial plane CL therebetween are shown in the drawing). The circumferential groove 3 may have any appropriate extending configuration such as zigzag, wavy, and the like, although the circumferential groove 3 extends linearly and continuously in the tire circumferential direction in FIG. 1.

The ground contact surface 2 of the tread portion is also provided with a plurality of lateral grooves 4 each opening to the corresponding circumferential groove 3 and being wider than the circumferential groove 3, as shown in FIG. 1 (each circumferential groove 3 extends linearly to open to a tread end TE in the example shown in the drawings). A rib-like center land portion21 including the tire equatorial plane CL is demarcated by the pair of the circumferential grooves 3 and block-like land portions 2 are demarcated by each circumferential groove 3 and the lateral grooves 4 corresponding thereto in FIG. 1.
It should be noted that the tread pattern shown in FIG. 1 is simply one example and our pneumatic tire is applicable to either a rib-based tread pattern or a block-based tread pattern. Further, the lateral grooves 4 may have any other appropriate configurations in which, e.g. groove widths thereof are not constant but change, the grooves extend in a zigzag or wavy manner, or the grooves do not open to an tread end TE but communicate with other grooves.

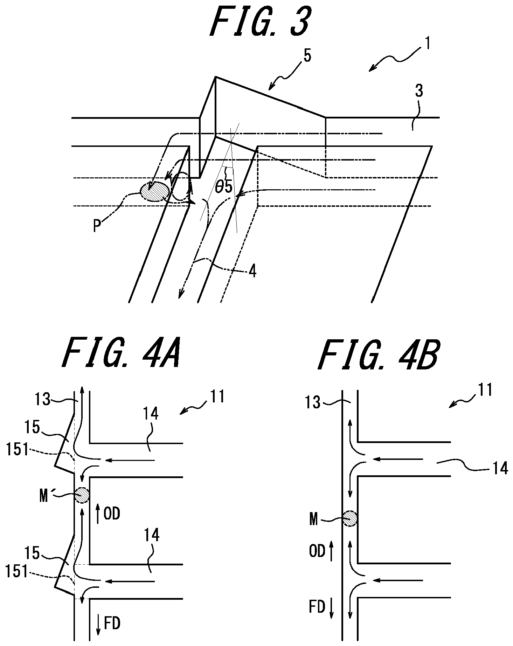

Durability of such a pneumatic tire as described above could deteriorate because of an excessive rise in temperature caused by rotation of the tire. In view of this, it is necessary, for example, to efficiently introduce air flows generated on a tire surface by rotation of the tire, into the grooves formed in a ground contact surface of the tread portion, in order to decrease temperature of the tread portion.
As shown in FIG. 4B, in a case of a tire 11 provided with a narrow circumferential groove 13 and wide lateral grooves 14 extending in a direction parallel to the tire width direction to open to the circumferential groove 13, air flows from the lateral grooves 14 into the circumferential groove 13 are generated by rotation of the tire 11. Since the lateral grooves 14 extend in a direction parallel to the tire width direction, as shown in FIG. 4B, air flow in each lateral groove 14 squarely collides with a circumferential groove wall, facing the lateral groove 14, of the circumferential groove 13, such that the air flow is substantially equally dispersed in the forward direction FD (downward in FIG. 4B) and the opposite direction OD (upward in FIG. 4B) of the tire rotation, respectively. As a result, air flow in the FD/OD direction from one lateral groove 14 collides with air flow from in the OD/FD direction from another lateral groove 14 adjacent in the tire circumferential direction at the middle point M between the two lateral grooves, whereby air flow is made sluggish and heat cannot be dissipated in a satisfactory manner in the vicinity of the middle point M, which eventually results in failure in a satisfactory decrease in temperature of a tread portion.

In view of this, a recessed portion 5 is formed in one circumferential groove wall W1 (a circumferential groove wall on the side of the tire equatorial plane CL in FIGS. 1, 2A and 2B) of the circumferential groove 3, so that the recessed portion 5 removes a portion of the circumferential groove wall W1 and that an aperture plane portion 4a, at which the lateral groove 4 opens to the other circumferential groove wall W2 (a circumferential groove wall on the outer side in the tire width direction in FIGS. 1, 2A and 2B) of the circumferential groove 3, at least partially faces or overlaps an aperture plane portion 51 of the recessed portion 5 at which the recessed portion 5 opens to the circumferential groove 3, in the pneumatic tire 1, as shown in FIGS. 1, 2A and 2B. The recessed portion 5 shown in FIGS. 1, 2A and 2B opens to the ground contact surface 2 of the tread, as well.
According to the structure described above, air flow from the lateral groove 4 into the circumferential groove 3 can be unevenly dispersed in the circumferential groove 3 by the recessed portion 5, as shown in FIG. 2B, whereby a point M' at which air flow in the forward direction FD collides with air flow in the opposite direction OD in the circumferential groove 3 is shifted close to the lateral groove 4, as compared with a case where the recessed portion 5 is not provided, and air vigorously flows in the vicinity of the middle point M. As a result, heat dissipation is facilitated and temperature of the tread portion can be satisfactorily decreased in the vicinity of the middle point M. Although heat dissipation in the vicinity of the point M' is somewhat disturbed by air flows in this case, temperature of the tread portion can be much more decreased than the case where the collision point M' is positioned at the middle point M because the collision point M' is located close to the lateral groove in the former.

The recessed portion 5 is defined by: an aperture plane portion 51 along the circumferential groove wall W1 in which the recessed portion 5 has been formed; and a groove wall W3 and a groove wall W4 each adjacent to the circumferential groove wall W1, as shown in FIG. 2A. The aperture plane portion 51 forms an imaginary corner portion A3 having an angle θ3 and an imaginary corner portion A4 having an angle θ4 of the recessed portion 5, respectively, with respect to the groove wall W3 and the groove wall W4 of the recessed portion 5.

Although the recessed portion 5 may have any appropriate configuration, it is preferable that a length W in the tire width direction of the recessed portion changes in the tire circumferential direction, as shown in FIG. 2A. The length W gradually increases from the corner portion A3 on the one side in the tire circumferential direction of the recessed portion 5 to the peak T of the recessed portion and gradually decreases from the peak T to the corner portion A4 on the other side in the tire circumferential direction of the recessed portion 5 in the example shown in FIG. 2A.
Further, it is preferable that a length L in the tire circumferential direction of the recessed portion 5 decreases from the aperture plane portion 51 side, opening to the circumferential groove 3, of the recessed portion 5 toward the inner side of the recessed portion (toward the peak T in the example shown in FIG.2A). More specifically, the length L is largest at the aperture plane portion 51 of the recessed portion 5 and decreases toward the peak T.
The structure described above causes air flow from the lateral groove 4 into the circumferential groove 3 to first flow into the corner portion A3 side of the recessed portion 5 and then exit from the corner portion A4 side toward the circumferential groove 3, thereby facilitating air flow in the opposite direction OD. As a result, air flow from the lateral groove 4 into the circumferential groove 3 is unevenly dispersed in a more effectively manner so that heat is more dissipated in the vicinity of the middle point M.

The maximum length in the tire circumferential direction of the recessed portion 5 is preferably 150 mm or less and the maximum length in the tire width direction of the recessed portion 5 is preferably 50 mm or less. The recessed portion 5 having too large dimensions may rather deteriorate wear resistance and the recessed portion 5 having too small dimensions may result in unsatisfactory dispersion of air flow in the circumferential groove 3.

The recessed portion 5 shown in FIGS. 2A and 2B has a triangular shape in which the angle θ3 of the corner portion A3 > the angle θ4 of the corner portion A4. Alternatively, the recessed portion 5 may have, a triangular shape in which θ3 = 90° (not shown in the drawings), an isosceles triangular shape in which θ3 = θ4 (not shown in the drawings), or the like. The recessed portion 5 described above preferably has an asymmetric planar configuration with respect to any imaginary line in parallel to the tire width direction in a top view of a ground contact surface of the tread, as shown in FIGS. 2A and 2B. This structure facilitates effective introduction of air flow, moving from the lateral groove 4 into the circumferential groove 3, to the opposite direction OD, as shown in FIG. 2B, thereby dispersing the air flow unevenly in a more effective manner. In a case where the recessed portion 5 has an isosceles triangular shape in which θ3 = θ4, in particular, the recessed portion 5 is preferably formed such that the peak T thereof is shifted from the center axis line (indicated by a dashed line in FIG. 2A) of the lateral groove 4 in terms of dispersing air flow, moving from the lateral groove 4 into the circumferential groove 3, unevenly in an effective manner.

With regard to provision of the recessed portion 5, providing the recessed portion 5 at least in a portion of the groove wall ranging from the ground contact surface 2 of the tread to the groove bottom, of the circumferential groove 3, suffices. It is preferable, however, that the recessed portion 5 is formed to be at least adjacent to the groove bottom of the circumferential groove 3. Providing the recessed portion 5 to be at least adjacent to the groove bottom of the circumferential groove 3 facilitates heat dissipation at the groove bottom in the circumferential groove 3, which is advantageous because temperature of the tread portion is relatively high on the side close to the carcass provided on the inner side in the tire radial direction thereof It is more preferable that the recessed portion 5 is formed in the groove wall to exist from the groove bottom to the ground contact surface 2 of the tread in terms of achieving satisfactory heat dissipation in the circumferential directions 3 and the tread portion as a whole.
Further, the recessed portion 5 is preferably provided within a range in the tire circumferential direction between the corner portions A3 and A4 described above because then air, passing through the recessed portion 5, flows smoothly

Each of the lateral grooves 4 extends toward the outer side in the tire width direction at an angle ≥ 30° with respect to the tire width direction in the pneumatic tire 1, as shown in FIGS. 1 to 3.
Provided that a tire circumferential direction in which the lateral groove 4 is inclined from the aperture plane portion 4a thereof toward the outer side in the tire width direction represents an "inclination direction of the lateral groove 4", air flows from the lateral groove 4 into the circumferential groove 3 when the tire 1 is rotated in the inclination direction of the lateral groove 4, as shown in FIG. 2B. In this case, air flow is more unevenly dispersed in the forward direction FD and the opposite direction OD than the tire show in FIG. 4A in which the lateral grooves 14 are not inclined in the tire width direction, whereby the point M' at which air flows of opposite directions collide with each other is further shifted toward the lateral groove 4 side. In this regard, setting an inclination angle θ5 of the lateral groove 4 to be ≥ 30° facilitates the further shift of the point M' toward the lateral groove 4 side when the tire 1 is rotated in the inclination direction of the lateral groove 4, thereby contributing to a more effective decrease in temperature of the tread portion.
When the tire 1 is rotated in a direction opposite to the inclination direction of the lateral groove 4, air flows from the circumferential groove 3 into the lateral groove 4, as shown in FIG. 3. However, in this case, a descending air flow moving from the side opening to the ground contact surface 2 to the groove bottom side of the circumferential groove 3 is generated at a (neck) point P in the circumferential groove 3, as shown in FIG. 3, thereby effectively dissipating heat at the point P. In this regard, setting the inclination angle θ5 of the lateral groove 4 to be ≥ 30° generates a small swirl in the circumferential groove 3 and causes the descendent air flow to climb over the swirl, as shown in FIG. 3, thereby successfully making the descendent air flow stronger than a case where the inclination angle θ5 < 30°, i.e. making air flow into the lateral groove 4 with effectively cooling the point P. As a result, temperature of the tread portion can be reliably decreased even when the tire 1 is rotated in a direction opposite to the inclination direction of the lateral groove 4.

The angle θ5 may be set to be any appropriate angle ≥ 30° but is preferably in the range of 30° ≤ θ5 ≤ 60° because too large θ5 may decrease rigidity of land portions in which the lateral groove 4 has been provided.

In a case where the recessed portion 5 has a mildly slanted groove wall W4 having a relatively small inclination angle with respect to the extending direction of the circumferential groove 3 and a sharply slanted groove wall W3 having a relatively large inclination angle (larger than that of the mildly slanted groove wall W4) with respect to the extending direction of the circumferential groove 3, it is preferable that the lateral groove 4 extends from the aperture plane portion 4a thereof toward the outer side in the tire width direction, with being inclined in a direction from the mildly slanted groove wall W4 side to the sharply slanted groove wall W3 side of the recessed portion 5, as shown in FIGS. 2A and 2B. This structure allows air to flow smoothly from the lateral groove 4/the circumferential groove into the circumferential groove 3/the lateral groove 4, thereby contributing to an effective decrease in temperature of the tread portion.

Further, in the case where that the lateral groove 4 extends from the aperture plane portion 4a thereof toward the outer side in the tire width direction, with being inclined in a direction from the mildly slanted groove wall W4 side to the sharply slanted groove wall W3 side of the recessed portion 5, it is preferable that an imaginary extension of the groove wall W5, on the side of the sharply slanted groove wall W3 of the recessed portion 5, of a pair of groove walls of the lateral groove 4 coincides with the sharply slanted groove wall W3, as shown in FIGS. 2A and 2B. This structure makes air flows satisfactorily smooth, thereby contributing to an effective decrease in temperature of the tread portion.

Yet further, in the structure where the lateral groove 4 is inclined with respect to the tire width direction, it is preferable that the remotest position from the aperture plane portion 51, of the recessed portion 5, i.e. the peak T, is located closer to the corner portion A3 than the corner portion A4 is to the peak T, as shown in FIGS. 2A and 2B. This structure allows air flows to be satisfactorily smooth.

When the aperture plane portion 4a of the lateral groove 4 is projected in a direction parallel to the extending direction of the lateral groove 4 against the circumferential groove wall W1, either of following two cases is acceptable for the recessed portion 5 that: i) the corner portion A3 is positioned on the further forward direction FD side than one end R3, on the corner portion A3 side, of the projected area on the circumferential groove wall W1 and the corner portion A4 is positioned on the further opposition direction OD side than the other end R4, on the corner portion A4 side, of the same projected area; and ii) the corner portion A3 is positioned between the end R3 and the end R4 and the corner portion A4 is positioned on the further opposition direction OD side than the other end R4. It is preferable, however, that the end R3 coincides with the corner portion A3 and the corner portion A4 is more distanced from the corner portion A3 than the end R4 is, as shown in FIGS. 2A and 2B. This structure allows air flows to be satisfactorily smooth.

With regard to a negative ratio of the ground contact surface 2 of the tread portion (a ratio of the groove area with respect to the ground contact surface area of the tread portion), it is preferable that in the ground contact surface 2 a negative ratio in a (center) region thereof ranging from the tire equatorial plane CL to a position distanced from the tire equatorial plane CL by a length of 1/4 of the full width of the tread, measured in the tire width direction, is lower than a negative ratio in a (shoulder) region ranging from the tread width 1/4 position to the tread end TE. This structure ensures that satisfactory rigidity is maintained in the center region of the tread portion.

A groove width of the circumferential groove 3 is preferably in the range of 3 mm to 30 mm because air flows are disturbed when the groove is too narrow and the rigidity of the land portions undesirably decreases when the groove is too wide. The circumferential groove 3 is preferably distanced by a length of 1/12-1/4 of the full tread with (around 100 mm to 300 mm when the full tread width is around 1200 mm) from the tire equatorial plane CL on the outer side in the tire width direction. This structure successfully decreases temperature of the tread portion (temperature of the center region thereof, in particular, which experiences a significant rise in temperature by rotation of the tire) with maintaining satisfactory rigidity of the center region of the tread portion. A groove width of the lateral groove 4 is preferably in the range of 5 mm to 120 mm because air cannot flow through the groove 4 when the groove is too narrow. The adjacent two lateral grooves 4 have an interval threbetween which is preferably 2 to 5 times as wide as the groove width of the lateral groove 4. This structure satisfactorily decreases temperature of the tread portion, with maintaining good rigidity of the tread portion.

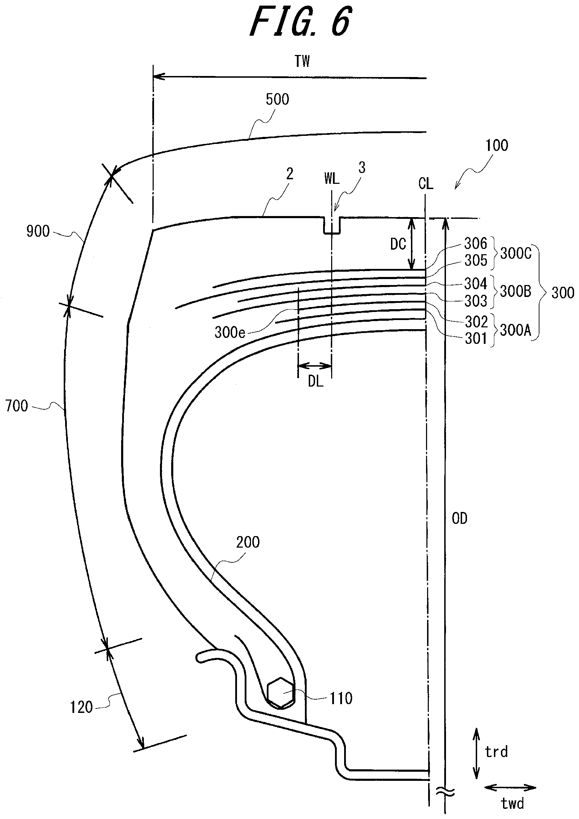

Our pneumatic tire is not confined to the aforementioned examples and can be modified in an appropriate manner. For example, the foregoing pneumatic tire may have an internal structure as described below with reference to FIG. 6.

Specifically, FIG. 6 is a view exemplarily showing a cross section in the tire width direction of a half portion of a pneumatic tire according to one embodiment of our pneumatic tire. The pneumatic tire 100 shown in FIG. 6 is, for example, a heavy load tire for a construction vehicle.

FIG. 6 is a cross sectional view in the tire width direction, showing a tire internal structure of a pneumatic tire in particular a heavy load tire for a construction vehicle according to the one embodiment of our pneumatic tire. The tire 100 has a relatively large thickness gauge of rubber of the tread portion 500, as compared with a pneumatic tire mounted on a passenger vehicle or the like, as shown in FIG. 6. The internal structure of a tire described below can be applied to each of the tires having the tread patterns described with reference to FIGS. 1 to 4B.

Specifically, provided that the tire outer diameter is OD and a rubber gauge of the tread portion 500 at the tire equatorial plane CL position is DC, the tire 100 satisfies DC/OD ≥ 0.015.

The tire outer diameter OD (unit: mm) represents the diameter of the tire 100 at a portion thereof having the maximum outer diameter (in general the tread portion 500 in the vicinity of the tire equatorial plane CL). The rubber gauge DC (unit: mm) represents rubber thickness of the tread portion 500 at the tire equatorial plane CL position. The rubber gauge DC does not include thickness of a belt 300. In a case where a circumferential groove is formed at a position including the tire equatorial plane CL, the rubber thickness of the tread portion 500 at a position adjacent to the circumferential groove is regarded as the rubber gauge DC.

The tire 100 has a pair of bead cores 110, a carcass 200, and a belt 300 constituted of a plurality of belt layers, as shown in FIG. 6. Although FIG. 6 shows only one half width portion of the tire 100, the other half width portion of the tire 100 not shown in FIG. 6 shares the same structure as the one half width portion.

The bead cores 110 are provided in bead portions 120, respectively. Each bead core 110 is constituted of bead wires (not shown).

The carcass 200 constitutes a skeleton of the tire 100. The carcass 200 extends from the tread portion 500 to the bead portions 120 via buttress portions 900 and sidewall portions 700.

The carcass 200 is provided to extend across the pair of bead cores 110 and has a toroidal shape. The carcass 200 surrounds the respective bead cores 110 in the present embodiment. The carcass 200 is in contact with the bead cores 110. Accordingly, respective ends of the carcass 200 in the tire width direction twd are supported by the pair of the bead portions 120.

The carcass 200 has carcass cords extending in a predetermined direction in a top view of the ground contact surface 2 of the tread portion. The carcass cords extend in the tire width direction twd in the present embodiment. Steel cords, for example, are used for the carcass cords.

The belt 300 is provided in the tread portion 500 on the outer side in the tire radial direction trd of the carcass 200. The belt 300 extends in the tire circumferential direction. The belt 300 has belt cords extending to be inclined with respect to the predetermined direction in which the carcass cords extend. Steel cords, for example, are used for the belt cords.

The belt 300 constituted of a plurality of belt layers includes a first belt layer 301, a second belt layer 302, a third belt layer 303, a fourth belt layer 304, a fifth belt layer 305, and a sixth belt layer 306.

The first belt layer 301 is positioned on the outer side in the tire radial direction trd of the carcass 200. The first belt layer 301 is positioned on the innermost side in the tire radial direction trd among the plurality of belt layers constituting the belt 300. The second belt layer 302 is positioned on the outer side in the tire radial direction trd of the first belt layer 301. The third belt layer 303 is positioned on the outer side in the tire radial direction trd of the second belt layer 302. The fourth belt layer 304 is positioned on the outer side in the tire radial direction trd of the third belt layer 303. The fifth belt layer 305 is positioned on the outer side in the tire radial direction trd of the fourth belt layer 304. The sixth belt layer 306 is positioned on the outer side in the tire radial direction trd of the fifth belt layer 305. The sixth belt layer 306 is positioned on the outermost side in the tire radial direction trd among the plurality of belt layers constituting the belt 300. In short, the first belt layer 301, the second belt layer 302, the third belt layer 303, the fourth belt layer 304, the fifth belt layer 305, the sixth belt layer 306 are provided from the inner side toward the outer side in the tire radial direction trd in this order.

Widths in the tire width direction twd of the first belt layer 301 and the second belt layer 302 (measured in the tire width direction twd) are each in the range of 25% to 70% (inclusive of 25% and 70%) of the tread width TW in the present embodiment. Widths in the tire width direction twd of the third belt layer 303 and the fourth belt layer 304 (measured in the tire width direction twd) are each in the range of 55% to 90% (inclusive of 55% and 90%) of the tread width TW. Widths in the tire width direction twd of the fifth belt layer 305 and the sixth belt layer 306 (measured in the tire width direction twd) are each in the range of 60% to 110% (inclusive of 60% and 110%) of the tread width TW.

Regarding the widths in the tire width direction twd of the belt layers, the width of the fifth belt layer 305 > the width of the third belt layer 303; the width of the third belt layer 303 ≥ the width of the sixth belt layer 306; the width of the sixth belt layer 306 > the width of the fourth belt layer 304; the width of the fourth belt layer 304 > the width of the first belt layer 301; and the width of the first belt layer 301 > the width of the second belt layer 302 in the present embodiment. Among the widths in the tire width direction twd of the belt layers constituting the belt 300, the width of the fifth belt layer 305 is the largest and the width of the second belt layer 302 is the smallest. Accordingly, the belt 300 constituted of a plurality of belt layers includes the narrowest belt layer having the smallest width in the tire width direction twd (the second belt layer 302 in the present embodiment) of the belt layers.

The second belt layer 302 as the narrowest belt layer has respective belt ends 300e in the tire width direction twd.

An inclination angle of the belt cords of the first belt layer 301 and the second belt layer 302 with respect to the carcass cords in a top view of the ground contact surface 2 of the tread portion is in the range of 70° to 85° (inclusive of 70° and 85°) in the present embodiment. An inclination angle of the belt cords of the third belt layer 303 and the fourth belt layer 304 with respect to the carcass cords is in the range of 50° to 75° (inclusive of 50° and 75°). An inclination angle of the belt cords of the fifth belt layer 305 and the sixth belt layer 306 with respect to the carcass cords is in the range of 50° to 70° (inclusive of 50° and 70°).

The belt 300 constituted of the plurality of belt layers includes an inner intersecting belt group 300A, an intermediate intersecting belt group 300B, and an outer intersecting belt group 300C. Each intersecting belt group 300A - 300C represents a group of belt layers disposed adjacent to each other in the tire radial direction such that the belt cords of one belt layer intersect the belt cords of another belt layer adjacent thereto (preferably in a symmetrical manner with respect to the tire equatorial plane) in a top view of the ground contact surface 2 of the tread portion.

The inner intersecting belt group 300A is constituted of a set of belt layers and disposed on the outer side in the tire radial direction trd of the carcass 200. The inner intersecting belt group 300A is constituted of the first belt layer 301 and the second belt layer 302 in the present embodiment. The intermediate intersecting belt group 300B is constituted of a set of belt layers and disposed on the outer side in the tire radial direction trd of the inner intersecting belt group 300A. The intermediate intersecting belt group 300B is constituted of the third belt layer 303 and the fourth belt layer 304 in the present embodiment. The outer intersecting belt group 300C is constituted of a set of belt layers and disposed on the outer side in the tire radial direction trd of the intermediate intersecting belt group 300B. The outer intersecting belt group 300C is constituted of the fifth belt layer 305 and the sixth belt layer 306 in the present embodiment.

A width in the tire width direction twd of the inner intersecting belt group 300A is in the range of 25% to 70% (inclusive of 25% and 70%) of the tread width TW. A width in the tire width direction twd of the intermediate intersecting belt group 300B is in the range of 55% to 90% (inclusive of 55% and 90%) of the tread width TW. A width in the tire width direction twd of the outer intersecting belt group 300C is in the range of 60% to 110% (inclusive of 60% and 110%) of the tread width TW.

An inclination angle of the belt cords of the inner intersecting belt group 300A with respect to the carcass cords in a top view of the ground contact surface 2 of the tread portion is in the range of 70° to 85° (inclusive of 70° and 85°). An inclination angle of the belt cords of the intermediate intersecting belt group 300B with respect to the carcass cords in a top view of the ground contact surface 2 of the tread portion is in the range of 50° to 75° (inclusive of 50° and 75°). An inclination angle of the belt cords of the outer intersecting belt group 300C with respect to the carcass cords in a top view of the ground contact surface 2 of the tread portion is in the range of 50° to 70° (inclusive of 50° and 70°).

The inner intersecting belt group 300A has the largest inclination angle of the belt cords with respect to the carcass cords among the intersecting belt groups in a top view of the ground contact surface 2 of the tread portion. The inclination angle of the belt cords of the intermediate intersecting belt group 300B with respect to the carcass cords is equal to or larger than the inclination angle of the belt cords of the outer intersecting belt group 300C with respect to the carcass cords.

The circumferential groove 3 is formed such that, provided that WL represents the groove width center line passing through the center in the width direction of the circumferential groove 3 and DL represents a distance in the tire width direction twd between the belt end 300e and the tire widthwise innermost position (i.e. the tire widthwise innermost bent position) of the groove width center line WL in a top view of the ground contact surface 2 of the tire 100, DL ≤ 200 mm.

### EXAMPLES

The following Examples do not restrict our pneumatic tire by any means.

Example 1 tire is a test tire having tire size of 59/80R63 and a tread pattern, as shown in FIGS. 1, 2A and 2B, in which recessed portions are formed in circumferential grooves and each lateral groove is inclined with respect to the tire width direction at the angle taught in Table 1. Each of the recessed portions has a configuration, as shown in FIGS. 2A and 2B. Each lateral groove extends from the aperture plane portion thereof toward the outer side in the tire width direction, with being inclined in a direction from a mildly slanted groove wall W4 side to a sharply slanted groove wall W3 side of the recessed portion. An imaginary extension of the groove wall W5, on the side of the sharply slanted groove wall W3 of the recessed portion, of a pair of groove walls of the lateral groove coincides with the sharply slanted groove wall W3 of the recessed portion.
Comparative Example 1 tire is a test tire which is substantially the same as Example 1 tire, except that no recessed portion is formed and the lateral grooves extend in a direction parallel to the tire width direction in the former. Comparative Example 2 tire is a test tire having a tread pattern as shown in FIG. 4A and is substantially the same as Example 1 tire, except that the lateral grooves extend in a direction parallel to the tire width direction in the former.

Each of the test tires was assembled with a rim (rim width: 36 inches), inflated at internal pressure of 600 kPa, and set on an indoor drum tester (load: 82.5 t, drum diameter: 5 m, drum surface velocity: 8 km/hour). The test tire thus set on the indoor drum tester was rotated in the inclination direction or the direction opposite to the inclination direction of the lateral grooves for 24 hours and temperature of the rib-like center land portion adjacent to the circumferential grooves was measured. Difference in temperature of the rib-like center land portion between before and after the running of the tire was calculated. The reciprocal of the difference was then obtained and converted to an index value relative to the index value "100" of Comparative Example 1 tire. The larger index value represents the better heat dissipation from the tread portion. Specifically, temperature was measured at an intersection of an imaginary line extending in the tire circumferential direction on the 50 mm inner side in the tire width direction of the circumferential groove wall W1 and an imaginary line passing through the circumferential middle position between the lateral grooves adjacent to each other in the tire circumferential direction and extending in parallel to these lateral grooves.
In this connection, air flowed mainly from the lateral groove into the circumferential groove when the tire was rotated in the inclination direction of the lateral grooves and mainly from the circumferential groove into the lateral groove when the tire was rotated in the direction opposite to the inclination direction of the lateral grooves.

**Table 1**

| | Inclination angle (°) of lateral grooves | Rotation direction of tire | |
|---|---|---|---|
| | | Inclination direction of lateral grooves | Direction opposite to Inclination direction |
| Comparative Example 1 | 0 | 100 | |
| Comparative Example 2 | 0 | 102 | |
| Example 1 | 30 | 110 | 108 |

It is understood from the results shown in Table 1 that temperature of the tread portion is lower in Example 1 tire and Comparative Example 2 tire having the recessed portions formed in the circumferential grooves than Comparative Example 1 tire having no recessed portions. Further, it is understood that temperature of the land portion is lower in Example 1 tire having the lateral grooves inclined at an inclination of 30° with respect to the tire width direction than Comparative Example 2 tire having the lateral grooves not inclined with respect to the tire width direction.

### INDUSTRIAL APPLICABILITY

According to our pneumatic tire, it is possible to provide a pneumatic tire capable of facilitating heat dissipation of a tread portion thereof to decrease temperature at the tread portion with suppressing an increase in groove area as best as possible.

### REFERENCE SIGNS LIST

- 1, 11, 100: Pneumatic tire, tire
- 2: Ground contact surface of tread portion
- 3, 13: Circumferential groove
- 4, 14: Lateral groove
- 4a: Aperture plane portion of lateral groove
- 5,15: Recessed portion
- 51, 151: Aperture plane portion of recessed portion
- 120: Bead portion
- 200: Carcass
- 300: Belt
- 301: First belt layer
- 302: Second belt layer
- 303: Third belt layer
- 304: Fourth belt layer
- 305: Fifth belt layer
- 306: Sixth belt layer
- 300A: Inner intersecting belt group
- 300B: Intermediate intersecting belt group
- 300C: Outer intersecting belt group
- 300e: Belt end
- 500: Tread portion
- 700: Sidewall portion
- 900: Buttress portion
- CL: Tire equatorial plane
- L: Length in tire circumferential direction of recessed portion
- M: Middle point
- M': Air flow collision point
- T: Peak of recessed portion
- TW: Tread width
- W: Length in tire width direction of recessed portion
- W1, W2: Circumferential groove wall
- W3, W4: Groove wall of recessed portion
- W5: Groove wall of lateral groove
- θ5: Inclination angle of lateral groove

## Claims

1. A pneumatic tire (1), having in a ground contact surface (2) of a tread thereof at least one circumferential groove (3) extending in the tire circumferential direction and a plurality of lateral grooves (4) each opening to the corresponding circumferential groove (3) and being wider than the circumferential groove (3), wherein:
a recessed portion (5) is formed in a circumferential groove wall (W1), facing the corresponding lateral groove (4), of the circumferential groove (3);
an aperture plane portion (4a) of the lateral groove (4) at which the lateral groove (4) opens to the circumferential groove (3) at least partially faces an aperture plane portion (51) of the recessed portion (5) at which the recessed portion (5) opens to the circumferential groove (3);
each lateral groove (4) extends to be inclined with respect to the tire width direction at an inclination angle of at least 30°;
the recessed portion (5) is defined by a first groove wall (W3) and a second groove wall (W4) each adjacent to the circumferential groove wall (W1) and the aperture plane portion (51) such that:
i) the aperture plane portion (51) and said first and second groove walls (W3, W4) together form a triangular shape, and
ii) a first angle (θ3) and a second angle (θ4) formed by the first groove wall (W3) and the second groove wall (W4) with respect to the aperture plane portion (51), respectively, are each ≤ 90°; and
the bottom of the circumferential groove has no projections provided thereon.

2. The pneumatic tire (1) of claim 1, wherein in the ground contact surface (2) a negative ratio in a center region thereof ranging from the tire equatorial plane (CL) to a position distanced from the tire equatorial plane (CL) by a length of 1/4 of the full width of the tread, measured in the tire width direction, is lower than a negative ratio in a shoulder region ranging from the tread width 1/4 position to the tread end (TE).

3. The pneumatic tire (1) of claim 1 or 2, wherein a length (L) in the tire circumferential direction of the recessed portion (5) decreases from the aperture plane portion (51) side of the recessed portion (5) toward the inner side of the recessed portion (5).

4. The pneumatic tire (1) of any of claims 1 to 3, wherein the recessed portion (5), in a top view of a ground contact surface of the tread portion, has an asymmetric planar configuration with respect to any imaginary line in parallel to the tire width direction.

5. The pneumatic tire (1) of any of claims 1 to 4, wherein the recessed portion (5) has a mildly slanted groove wall (W4) and a sharply slanted groove wall (W3) slanted at a larger inclination angle with respect to the aperture plane portion (51) of the recessed portion (5) than the mildly slanted groove wall (W4), and
the lateral groove (4) extends from the aperture plane portion (4a) thereof toward the outer side in the tire width direction, with being inclined in a direction from the mildly slanted groove wall (W4) side to the sharply slanted groove wall (W3) side of the recessed portion (5).

6. The pneumatic tire (1) of claim 5, wherein an imaginary extension of the groove wall (W5), on the side of the sharply slanted groove wall (W3) of the recessed portion (5), of a pair of groove walls of the lateral groove (4) coincides with the sharply slanted groove wall (W3) of the recessed portion (5).

## Patentansprüche

1. Luftreifen (1), besitzend, in einer Bodenkontaktfläche (2) einer Lauffläche hiervon mindestens eine Umfangsrille (3), welche sich in Reifenumfangsrichtung erstreckt und eine Vielzahl von seitlichen Rillen (4), welche sich jeweils auf die entsprechende Umfangsrille (3) öffnen und welche breiter sind als die Umfangsrille (3), bei welchem:
ein vertiefter Abschnitt (5) in einer Umfangsrillenwand (W1) der Umfangsrille (3) gebildet ist, welche der entsprechenden seitlichen Rille (4) gegenüber liegt;
ein Öffnungsebenenabschnitt (4a) der seitlichen Rille (4), bei welchem die seitliche Rille (4) sich auf die Umfangsrille (3) öffnet, mindestens teilweise einem Öffnungsebenenabschnitt (51) des vertieften Abschnitts (5) gegenüber liegt, bei welchem sich der vertiefte Abschnitt (5) auf die Umfangsrille (3) öffnet;
sich jede seitliche Rille (4) erstreckt, um sich in Bezug auf die Reifenbreitenrichtung mit einem Neigungswinkel von mindestens 30° zu neigen;
der vertiefte Abschnitt (5) durch eine erste Rillenwand (W3) und eine zweite Rillenwand (W4) definiert ist, welche jeweils an die Umfangsrillenwand (W1) und den Öffnungsebenenabschnitt (51) angrenzen, in der Weise, dass:
i) der Öffnungsebenenabschnitt (51) und die erste und zweite Rillenwand (W3, W4) zusammen eine Dreiecksform bilden, und
ii) ein erster Winkel (θ3) und ein zweiter Winkel (θ4), die von der ersten Rillenwand (W3) und der zweiten Rillenwand (W4) in Bezug auf den Öffnungsebenenabschnitt (51) gebildet wird, jeweils < 90° betragen; und
der Grund der Umfangsrille keine hieran vorhandenen Vorsprünge besitzt.

2. Luftreifen (1) nach Anspruch 1, bei welchem in der Bodenkontaktfläche (2) ein negatives Verhältnis in einer mittleren Region hiervon, welche sich von der Reifenäquatorebene (CL) bis zu einer Position erstreckt, die von der Reifenäquatorebene (CL) um eine Länge von 1/4 der vollen Breite der Lauffläche entfernt liegt, gemessen in der Reifenbreitenrichtung, geringer ist als das negative Verhältnis in einer Schulterregion, welche sich von der Position in 1/4 der Laufflächenbreite bis zum Laufflächenende (TE) erstreckt.

3. Luftreifen (1) nach Anspruch 1 oder 2, bei welchem eine Länge (L) in der Reifenumfangsrichtung des vertieften Abschnitts (5) von der Öffnungsebenenabschnittsseite (51) des vertieften Abschnitts (5) in Richtung auf die innere Seite des vertieften Abschnitts (5) abnimmt.

4. Luftreifen (1) nach einem der Ansprüche 1 bis 3, bei welchem der vertiefte Abschnitt (5), in einer Draufsicht einer Bodenkontaktfläche des Laufflächenabschnitts, eine asymmetrische planare Konfiguration in Bezug auf jede beliebige imaginäre Linie parallel zur Reifenbreitenrichtung besitzt.

5. Luftreifen (1) nach einem der Ansprüche 1 bis 4, bei welchem der vertiefte Abschnitt (5) eine leicht schräge Rillenwand (W4) und eine stark schräge Rillenwand (W3) mit einem größeren Neigungswinkel in Bezug auf den Öffnungsebenenabschnitt (51) des vertieften Abschnitts (5) als die leicht schräge Rillenwand (W4) besitzt, und
die seitliche Rille (4) sich vom Öffnungsebenenabschnitt (4a) hiervon nach außen in der Reifenbreitenrichtung erstreckt, wobei sie in einer Richtung von der leicht schrägen Rillenwandseite (W4) zur stark schrägen Rillenwandseite (W3) des vertieften Abschnitts (5) geneigt ist.

6. Luftreifen (1) nach Anspruch 5, bei welchem eine imaginäre Erweiterung der Rillenwand (W5), auf der Seite der stark schrägen Rillenwand (W3) des vertieften Abschnitts (5), eines Paars von Rillenwänden der seitlichen Rille (4), mit der stark schrägen Rillenwand (W3) des vertieften Abschnitts (5) übereinstimmt.

## Revendications

1. Pneu (1), ayant une surface en contact avec le sol (2) d'une bande de roulement de celui-ci, au moins une rainure circonférentielle (3) s'étendant dans la direction circonférentielle du pneu et une pluralité de rainures latérales (4) s'ouvrant chacune vers la rainure circonférentielle (3) correspondante et étant plus large que la rainure circonférentielle (3), dans lequel :
une partie en creux (5) est formée dans une paroi de rainure circonférentielle (W1), faisant face à la rainure latérale (4) correspondante, de la rainure circonférentielle (3) ;
une partie plan d'ouverture (4a) de la rainure latérale (4) au niveau de laquelle la rainure latérale (4) s'ouvre vers la rainure circonférentielle (3) fait face au moins partiellement à une partie plan d'ouverture (51) de la partie en creux (5) au niveau de laquelle la partie en creux (5) s'ouvre vers la rainure circonférentielle (3) ;
chaque rainure latérale (4) s'étend pour être inclinée par rapport à la direction de la largeur du pneu selon un angle d'inclinaison d'au moins 30° ;
la partie en creux (5) est définie par une première paroi de rainure (W3) et une deuxième paroi de rainure (W4) chacune adjacente à la paroi de rainure circonférentielle (W1) et à la partie plan d'ouverture (51) de telle sorte que :
(i) la partie plan d'ouverture (51) et lesdites première et deuxième parois de rainure (W3, W4) constituent ensemble une forme triangulaire, et
(ii) un premier angle (θ3) et un deuxième angle (θ4) formés par la première paroi de rainure (W3) et la deuxième paroi de rainure (W4) par rapport à la partie plan d'ouverture (51), respectivement, sont chacun ≤ 90° ; et
le fond de la rainure circonférentielle ne comporte pas de protubérances.

2. Pneu (1) selon la revendication 1, dans lequel dans la surface en contact avec le sol (2) un rapport négatif dans une zone centrale de celle-ci allant du plan médian de pneu (CL) à une position à distance du plan médian de pneu (CL) d'une longueur de 1/4 de la largeur totale de la bande de roulement, mesurée dans la direction de la largeur du pneu, est inférieur à un rapport négatif dans une zone d'épaulement allant de la position à 1/4 de la largeur de la bande de roulement à l'extrémité de bande de roulement (TE).

3. Pneu (1) selon la revendication 1 ou 2, dans lequel une longueur (L) dans la direction circonférentielle du pneu de la partie en creux (5) diminue du côté partie plan d'ouverture (51) de la partie en creux (5) vers le côté interne de la partie en creux (5).

4. Pneu (1) selon l'une quelconque des revendications 1 à 3, dans lequel la partie en creux (5), dans une vue de dessus d'une surface en contact avec le sol de la partie bande de roulement, a une configuration planaire asymétrique par rapport à une quelconque ligne imaginaire parallèle à la direction de la largeur du pneu.

5. Pneu (1) selon l'une quelconque des revendications 1 à 4, dans lequel la partie en creux (5) a une paroi de rainure modérément inclinée (W4) et une paroi de rainure fortement inclinée (W3) inclinée selon un angle d'inclinaison plus grand par rapport à la partie plan d'ouverture (51) de la partie en creux (5) que la paroi de rainure modérément inclinée (W4), et
la rainure latérale (4) s'étend de la partie plan d'ouverture (4a) de celle-ci en direction du côté externe dans la direction de la largeur du pneu, en étant inclinée dans une direction du côté de paroi de rainure modérément inclinée (W4) au côté de paroi de rainure fortement inclinée (W3) de la partie en creux (5).

6. Pneu (1) selon la revendication 5, dans lequel une extension imaginaire de la paroi de rainure (W5), sur le côté de la paroi de rainure fortement inclinée (W3) de la partie en creux (5), d'une paire de parois de rainure de la rainure latérale (4) coïncide avec la paroi de rainure fortement inclinée (W3) de la partie en creux (5).
